# FASCICULE DE BREVET EUROPEEN

(11) **EP 2 222 450 B1**
(45) Date de publication et mention de la délivrance du brevet: **18.04.2012**
(21) Numéro de dépôt: 08856118.8
(22) Date de dépôt: 02.12.2008
(51) Int. Cl.: B29C 47/06, B29C 47/30, B29D 30/52, B29D 30/62

(54) **Dispositif et procede de realisation d'une bande de roulement**
Vorrichtung und Verfahren zur Herstellung einer Lauffläche
Device and method for producing a tread

(30) Priorité: 03.12.2007 FR 0759492
(43) Date de publication de la demande: 01.09.2010
(73) Titulaire: Société de Technologie Michelin, 63000 Clermont-Ferrand (FR); Michelin Recherche et Technique S.A., 1763 Granges-Paccot (CH)
(72) Inventeur: BEAUDONNET, Christian, F-63190 Ravel (FR); BRUANT, Rémi, F-63200 Riom (FR); BRESSON, Daniel, F-63200 Mozac (FR); ORSAT, Thierry, F-63140 Chatel-Guyon (FR)
(74) Mandataire: Reynaud, Georges
(86) Numéro de dépôt international: PCT/EP2008/066647
(87) Numéro de publication internationale: WO 2009/071551

(56) Documents cités:
- EP-A- 1 433 592
- WO-A-03/089257
- WO-A-2006/069912
- US-A- 4 539 169
- US-A1- 2001 035 255
- US-A1- 2005 034 802

## Description

L'invention concerne le domaine de la fabrication des pneumatiques. Plus particulièrement, la présente invention s'intéresse au problème de la fabrication des bandes de roulement de pneumatiques dans lesquelles chaque pain de la sculpture sont formés d'au moins deux mélanges de nature élastomérique de qualités différentes.

Ce type de pneumatique est décrit à titre d'exemple dans la publication N° WO 03/089257 ou encore dans la publication N° JP 2005/186841. Cette construction particulière a pour objet d'améliorer, entre autre, les performances du pneumatique en roulage sur sol mouillé, tout en préservant les qualités d'usure et d'adhérence sur sol sec.

La fabrication de ce type de bande de roulement nécessite de grandes précautions pour disposer les matériaux de manière précise et reproductible. Une première méthode a été proposée et publiée sous le N° W0 2006/069912. Selon cette méthode, il est prévu d'injecter, à des positions prédéterminées, des mélanges d'insertion dans une bande de roulement de base non vulcanisée à l'aide d'une buse, après que l'extrémité de ladite buse ait été enfoncée dans ladite bande de roulement. L'introduction de l'ébauche de pneumatique en presse nécessite une grande attention pour disposer les inserts ainsi réalisés au droit des motifs de sculpture leur correspondant.

Toutefois on observe que cette méthode connaît quelques limites, en particulier pour obtenir des moulages de précision. Les mouvements de gomme lors du moulage ont pour effet de déplacer les insertions de mélange de manière aléatoire. Il s'en suit une grande dispersion des interfaces des mélanges, ce qui limite le nombre de mélanges différents qu'il est possible d'injecter dans un élément de sculpture.
La publication WO 03/089257 - A décrit une méthode de fabrication de la bande de roulement d'un pneumatique à l'aide d'un dispositif comprenant un support rotatif apte à supporter une bande de base non vulcanisée formant une surface de réception, et un dispositif pour l'application de bandelettes de mélanges différents sur ladite surface de réception, ladite bande de roulement comprenant une pluralité d'éléments de sculpture en relief, dans laquelle on réalise les étapes consistant à déposer sur un support rotatif une bande de base à partir d'un mélange élastomérique de base non vulcanisé et faisant fonction de surface de réception et à déposer directement sur ladite bande de base, à des emplacements prédéterminés correspondant sensiblement à l'emplacement des éléments de sculpture, des pavés de mélange non vulcanisé, destinés à former un élément de sculpture en relief, chacun des pavés étant composé d'au moins deux mélanges élastomériques non vulcanisés de qualités distinctes.
Ladite publication décrit aussi d'une façon très concise un dispositif pour la mise en oeuvre dudit procédé.

La présente invention a pour objet un dispositif et une méthode permettant de réduire les inconvénients du procédé décrit ci-dessus, en particulier lorsque l'on souhaite réaliser des éléments de sculpture en relief comportant plusieurs qualités de mélanges distincts.

Le dispositif selon l'invention, comme défini dans la revendication 1, comprend un ensemble rotatif apte à supporter une bande de base formant une surface de réception S, une matrice d'extrusion comprenant une pluralité de buses d'extrusion dont les canaux de sortie sont orientés sensiblement perpendiculairement à la surface de réception, au moins deux moyens d'alimentation en mélange débouchant chacun sur une ou plusieurs buses d'extrusion distinctes, et des moyens de positionnement et de déplacement de la matrice d'extrusion par rapport à la surface de réception S.

Toujours selon l'invention, la méthode de fabrication de la bande de roulement d'un pneumatique, comme définie dans la revendication 11, à l'aide d'un dispositif tel que détaillé au paragraphe précédent, permet de réaliser des bandes de roulement comprenant une pluralité d'éléments de sculpture en relief. Ladite méthode comprend les étapes consistant à :
- préparer une bande de base à partir d'un mélange élastomérique de base non vulcanisé, et faisant fonction de surface de réception,
- déposer directement sur ladite bande, à des emplacements prédéterminés correspondant sensiblement à l'emplacement des éléments de sculpture, par extrusion de mélange à l'aide des buses d'extrusion, des pavés de mélange non vulcanisé, destinés à former un élément de sculpture en relief, chacun des pavés étant composé d'au moins deux mélanges élastomériques non vulcanisés de qualités distinctes. Des formes avantageuses de l'invention font l'objet des revendications dépendantes.

On dispose alors d'une bande de roulement sur laquelle les reliefs de la sculpture apparaissent et sont positionnés à leurs emplacements quasi définitifs. Au moment de l'emboîtage de l'ébauche de pneumatique en presse, lors de la pénétration des motifs en relief du moule dans l'ébauche de la bande de roulement, les parties en relief du moule se placent directement dans les espaces prévus entre les pavés de mélange. Les mouvements de gomme sont alors très réduits et se limitent au remplissage des fonds de sculpture. Il en résulte une bien meilleure précision dans le positionnement des mélanges de natures différentes au sein d'un élément de sculpture en relief.

La description qui suit, permet d'illustrer un dispositif particulier selon l'invention et s'appuie sur les figures 1 à 17 dans lesquelles :
- la figure 1 représente une vue schématique d'une ébauche de pneumatique sur laquelle a été déposée un pavé de mélange,
- la figure 2 représente une vue schématique dudit pavé de mélange,
- les figures 3 à 8 représentant les différentes étapes de mise en oeuvre d'un dispositif selon l'invention,

- la figure 9 représente une première variante de réalisation d'un dispositif selon l'invention,
- la figure 10 représente une deuxième variante de réalisation d'un dispositif selon l'invention,
- la figure 11 représente une troisième variante de réalisation d'un dispositif selon l'invention,
- la figure 12 représente une vue schématique des moyens d'alimentation et de la matrice d'extrusion;
- les figures 13, 14 et 15, illustrent des exemples de motifs qu'il est possible de réaliser avec un dispositif selon l'invention,
- les figures 16 et 17 illustrent des vues en perspective de motifs de sculpture réalisés à l'aide d'un dispositif selon l'invention.

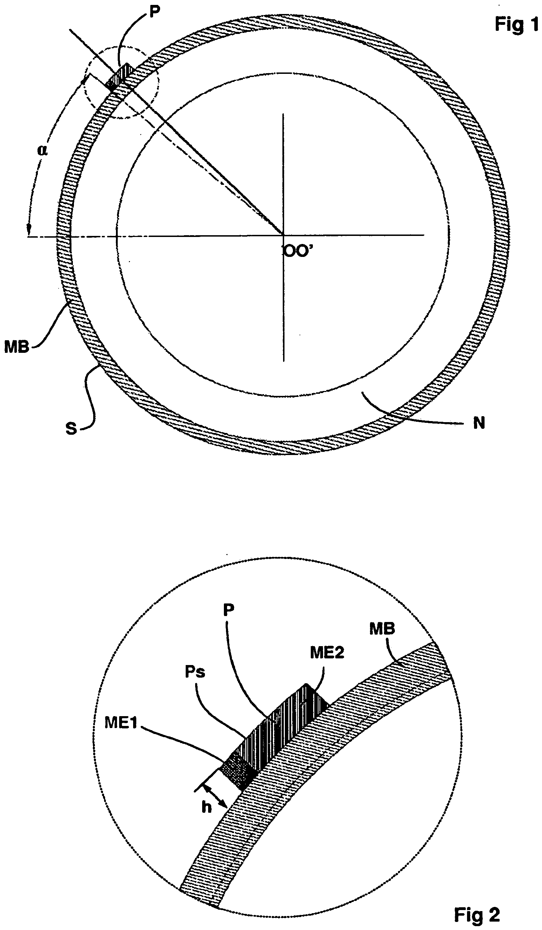

La figure 1 représente une vue schématique en coupe d'une bande base MB disposée sur un support M, en rotation autour de l'axe transversal OO'. Sur la bande de base a été déposé un pavé P, à un azimut α prédéterminé bien précis. La position du pavé de mélange P selon l'azimut α et selon la direction transversale OO' correspond à la position d'un élément en relief de la sculpture du pneumatique définitif.

La forme du support M pour la mise en oeuvre de l'invention peut être cylindrique, comme cela est le cas lorsque l'on a affaire à un moyen d'assemblage du pneumatique dans lequel les nappes de renfort sommet et la bande de roulement sont assemblés sur une forme indépendante, ou toroïdale, lorsque l'ensemble de l'ébauche du pneumatique est assemblé sur cette forme.

Il serait tout à fait possible de réaliser l'invention en disposant la bande de base MB sur un support plan. Il serait alors nécessaire, dans une étape ultérieure de fabrication, et après avoir disposé les pavés de mélange sur ladite bande de base, de prélever un tronçon de la bande de base et de déposer ce tronçon sur la forme d'assemblage sommet. On observera alors qu'il est difficile de réaliser un aboutage et une mise en joint des deux extrémités de la bande, sans altérer les pavés de mélange qui se trouveraient placés à l'endroit précis de la soudure des deux extrémités de la bande. D'autre part, les imprécisions dues à la pose par enroulement du tronçon de bande de base pourraient ruiner les effets recherchés par la mise en oeuvre d'un procédé selon l'invention. Aussi, on préférera un support cylindrique ou toroïdal sur lequel le mélange de base est disposé dans sa position quasi définitive, et permet un indexage précis de la position des pavés de mélange, indexage dont l'utilité sera développée dans la suite de la présente description.

La figure 2 représente une vue de détail du médaillon de la figure 1. Le pavé P est formé par la juxtaposition de deux mélanges distincts ME1 et ME2 disposés à la surface de la bande de base MB. Les mélanges ME1 et ME2 sont non vulcanisés, de manière à autoriser l'écoulement desdits mélanges dans les différents organes du dispositif pendant l'exécution du procédé selon l'invention.

Le pavé de mélange P a une hauteur h correspondant sensiblement à la hauteur d'un élément en relief de la sculpture du pneumatique. Les dimensions transversales et circonférentielle du pavé de mélange sont également ajustées avec un grand soin afin de correspondre aussi précisément que possible aux dimensions de l'élément de sculpture.

La surface radialement externe Ps du pavé P a sensiblement la forme de la surface destinée à être mise en contact avec le sol lorsque le pneumatique roule sur la chaussée, de l'élément de sculpture en relief auquel correspond ledit pavé P. Pour obtenir les effets de performance du pneumatique en roulage décrits précédemment, on observera également que chacun des mélanges est disposé radialement, de manière à affleurer au niveau de la surface Ps.

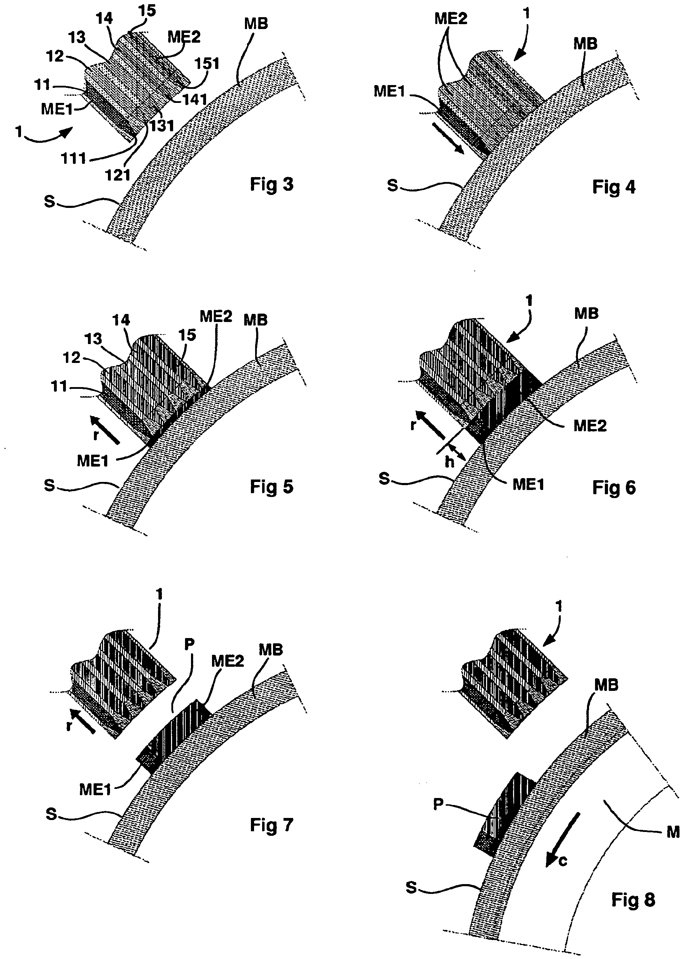

Les figures 3 à 8 illustrent schématiquement les différentes phases de mise en oeuvre d'un dispositif conforme à l'invention. Sur la figure 3 est représentée schématiquement une matrice d'extrusion 1, formée par la juxtaposition de buses d'extrusion 11, 12, 13, 14 et 15, orientées radialement dans une direction sensiblement perpendiculaire à la surface de réception S. Le mode de réalisation de l'invention représenté sur cette figure indique la présence de 5 buses d'extrusion distinctes. Il va de soi que l'on peut augmenter ce nombre de buse dans la direction transversale ou dans la direction circonférentielle sans se départir de l'esprit de l'invention.

Toujours selon l'exemple de la figure 3, chacune des buses est reliée à un moyen d'alimentation en mélange (non représenté) par l'intermédiaire d'un canal d'alimentation. Dans le cas du dispositif illustré à la figure 3, la buse d'extrusion 11 est reliée au moyen d'alimentation délivrant un mélange ME1, et les buses d'extrusion 12, 13, 14 et 15 sont reliées au moyen d'alimentation délivrant un mélange ME2. Comme cela sera évoqué par la suite il est possible, selon les besoins de la fabrication de concevoir autant d'arrangements que nécessaires, et de relier les buses à deux, voire plus, moyens d'alimentation distincts.

Les orifices de sortie 111, 121, 131, 141 et 151 sont disposés dans un plan sensiblement parallèle à la surface de réception S, ce qui s'avère utile si on souhaite obtenir des motifs de pavés dans lequel chacun des mélanges ME1, ME2 affleure à la surface Ps du pavé P.

On s'arrange de plus pour que les orifices des canaux de sortie des buses d'extrusion soient disposés de telle sorte qu'ils s'inscrivent dans l'aire Ps.

La première étape de mise en oeuvre de la méthode, consiste à approcher la matrice d'extrusion de manière à ce que les orifices de sortie soient placés au plus près de la surface de réception S. La figure 4 illustre le cas où les orifices de sortie 111, 121, 131, 141 et 151, des buses d'extrusion viennent au contact de la surface de réception.

L'étape suivante, telle qu'illustrée à la figure 5, consiste à activer les moyens d'alimentation en mélange de manière à extruder les mélanges ME1 et ME2 par les orifices 111, 121, 131, 141 et 151 des buses 11, 12, 13, 14, et 15. Simultanément, on éloigne la matrice d'extrusion radialement de la surface dans la direction r, de telle sorte que l'espace compris entre le plan formé par les orifices d'extrusion et la surface de réception, soit rempli par les mélanges ME1 et ME2 sortant des buses. La vitesse de retrait de la matrice d'extrusion doit être ajustée à la vitesse de remplissage dudit espace par les buses d'extrusion, de manière à ce que, autant que faire se peut, aucun vide ne soit susceptible de se créer entre les orifices des buses d'extrusion et la partie radialement supérieure du pavé en cours de réalisation.

Lorsque les orifices d'extrusion sont radialement distants de la hauteur h de la surface de réception, comme cela est illustré à la figure 6, le débit d'extrusion est stoppé.

On poursuit alors le mouvement radial d'éloignement de la matrice d'extrusion de la surface de réception jusqu'à la rupture des cordons de mélange sortant des orifices d'extrusion 111, 121, 131, 141 et 151. Pour cela, on s'arrange pour que la section des orifices de sortie soit significativement réduite par rapport à la section du canal de la buse d'extrusion de manière à réduire d'autant la section du cordon de mélange en sortie de la buse. Aussi, plus la section des orifices de sortie est faible, plus la distance à parcourir pour rompre les cordons est faible, et moins la surface Ps présentera d'irrégularités. En revanche, une section trop faible est susceptible d'entraîner un échauffement excessif des mélanges pendant l'extrusion, en particulier si l'on cherche à augmenter le débit pour des raisons évidentes d'accélération du cycle de pose.

La phase suivante consiste à déplacer le support M par rapport à la matrice d'extrusion dans la direction circonférentielle c, comme cela est représenté à la figure 8. En pratique, il s'avère commode d'utiliser les moyens d'entraînement en rotation du support M pour effectuer les mouvements relatifs dans la direction circonférentielle, et d'équiper la matrice d'extrusion d'un moyen de déplacement dans la direction transversale (parallèle à la direction OO') pour positionner la matrice d'extrusion à sa position exacte par rapport à la bande de base MB, laquelle position correspond à la position d'un élément de sculpture comme cela a déjà été dit plus haut. La combinaison de ces deux moyens permet de positionner avec précision la matrice d'extrusion par rapport à la surface de réception S. De manière préférentielle on utilisera des moyens pilotés par un automatisme pour commander les moteurs assurant la mise en rotation du support M et la translation de la matrice d'extrusion 1.

Le cycle de pose peut alors recommencer en enchaînant les séquences dans l'ordre qui vient d'être décrit, et déposer tous les pavés destinés à former les éléments en relief de la sculpture.

Pour améliorer le temps de réalisation d'une bande de roulement complète il est possible de disposer plusieurs matrices d'extrusion dans la direction circonférentielle ou dans la direction transversale pour autant que les motifs géométriques de la sculpture soient adaptés à cette configuration. De même, on pourra avantageusement adapter le nombre et la forme des matrices d'extrusion aux différents motifs de base de la sculpture de manière à réduire le nombre d'opération à réaliser.

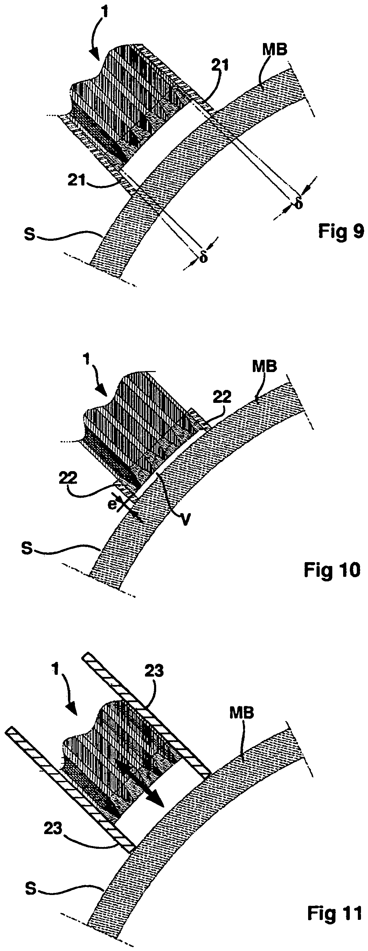

Les figures 9, 10 et 11 illustrent des perfectionnements qu'il est possible de réaliser sans se départir de l'esprit de l'invention. Une paroi 21, 22, 23 entoure la matrice d'extrusion. Cette paroi est apte à s'étendre dans la direction du flux de sortie du mélange au-delà du plan formé par les orifices des buses d'extrusion. En pratique la paroi s'étend radialement entre le plan formé par les orifices des buses d'extrusion et la surface de réception S.

Plusieurs configurations sont alors possibles.

Une première configuration, illustrée à la figure 9, correspond au cas où la matrice d'extrusion 1 est fixe par rapport à la paroi 21. Dans ce cas, la paroi 21 peut avoir la forme d'un cône dont les génératrices passent par la courbe correspondant sensiblement à la circonférence de la surface Ps, et convergent vers un point situé radialement à l'extérieur de la surface de réception S en faisant un angle δ par rapport à la surface de réception S. La paroi peut également avoir la forme d'un cylindre dont les génératrices sont orientées dans une direction sensiblement perpendiculaire à la surface de réception S et passent également par la courbe correspondant à la circonférence de la surface Ps.

Selon la configuration représentée à la figure 9, la hauteur de la paroi 21 est sensiblement égale à la hauteur h du pavé de mélange. Dans ce cas, le remplissage de l'espace délimité par la paroi 21, la surface de réception S et le plan formé par les orifices de buses d'extrusion se fait sans déplacement radial de la matrice d'extrusion.

Selon une deuxième configuration, représentée à la figure 10, la paroi 22 reste fixe par rapport à la matrice d'extrusion 1, mais a une hauteur e inférieure à la hauteur h. Dans ce cas, on retarde le déplacement radial de la matrice d'extrusion jusqu'à ce que le volume V, correspondant au volume délimité par la surface de réception S le plan formé par les orifices des buses et la paroi 22, soit complètement rempli par les mélanges ME1 et ME2. Lorsque le volume V est plein, la matrice d'extrusion se déplace radialement jusqu'à ce que le plan formé par les orifices soit distant de la hauteur h de la surface de réception.

Une troisième configuration, illustrée à la figure 11, consiste à rendre la paroi 23 mobile par rapport à la matrice d'extrusion. Dans ce cas, il convient de donner une forme cylindrique à la paroi 23 de telle sorte que la matrice d'extrusion puisse coulisser radialement dans l'espace intérieur délimité par la paroi 23. Dans cette configuration, le bord radialement intérieur de la paroi 23 reste en contact avec la surface de réception S pendant toute la durée de l'extrusion des mélanges. Et la matrice d'extrusion se déplace dans la direction radiale, au fur et à mesure du remplissage de l'espace compris entre la surface de réception, la paroi 23 et le plan formé par les orifices des buses d'extrusions. Cet arrangement particulier permet de conférer une meilleure qualité de surface aux parties latérales du pavé P.

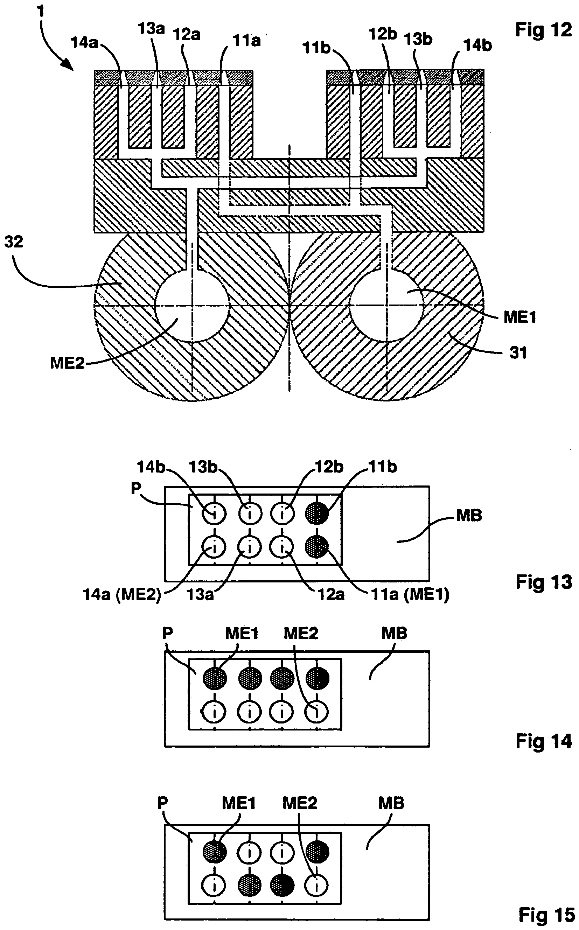

La figure 12 illustre schématiquement la liaison entre les moyens d'alimentation en mélange 31 et 32 et la matrice d'extrusion 1. Dans le cas illustré à la figure 12, la matrice d'extrusion comprend 8 buses d'extrusion disposées en deux rangs. Un premier rang, formé par les buses 11a, 12a, 13a, 14a, et un deuxième rang, formé par les buses 11b, 12b, 13b, 14b. Les deux rangs sont disposés l'un derrière l'autre dans la direction circonférentielle, et l'illustration de la figure 12 est une vue déployée des deux rangs de buses.

Le dispositif comprend également deux moyens d'alimentation 31 et 32, respectivement pour les mélanges ME1 et ME2. Chacun des moyens d'alimentation est relié à au moins une buse d'extrusion par l'intermédiaire de canaux de distribution. Ainsi les buses 11a et 11b sont reliées au moyen d'alimentation 31 dédié au mélange ME1 et les buses 12a, 13a, 14, 12b, 13b, 14b sont reliées au moyen d'alimentation 32 dédié au mélange ME2.

Les moyens d'alimentation peuvent être du type extrudeuse à vis ou, préférentiellement, des moyens d'extrusion volumétriques du type pompe à gomme apte à délivrer un débit volumétrique constant. Ce dernier choix s'avère particulièrement judicieux pour ce type d'application en raison du fait que le contrôle du volume du pavé P peut être contrôlé avec une grande précision.

On s'arrange également pour réguler les débits des moyens d'alimentation 31 et 32 de telle sorte que les débits en sortie des buses d'extrusion soient sensiblement égaux. Dans le cas d'espèce illustré à la figure 12 le débit du moyen d'alimentation 32 serait donc trois fois supérieur au débit du moyen d'alimentation 31.

La figure 13 représente un pavé P vu selon la direction radiale, et réalisé avec un dispositif arrangé selon la configuration illustrée à la figure 12. Chacune des buses d'extrusion délivre un volume calibré de mélange correspondant sensiblement à 1/8 du volume du pavé P.

Il va de soi que le nombre de combinaisons possibles concernant le nombre de buses ou le nombre de moyens d'alimentation différents n'est pas limité, et dépend essentiellement des caractéristiques géométriques des pavés de mélange que l'on veut réaliser et de l'encombrement unitaire des buses et des canaux d'alimentation. L'augmentation du nombre de buses permet de réaliser des motifs très précis, et l'augmentation du nombre de moyens d'alimentation permet de délivrer la qualité de mélange élastomérique idéale en chacune des parties du pavé de sculpture.

Les figures 14 et 15 illustrent d'autres arrangements dans la distribution des deux mélanges ME1 et ME2 vers les 8 buses, telles qu'illustrées à la figure 12.

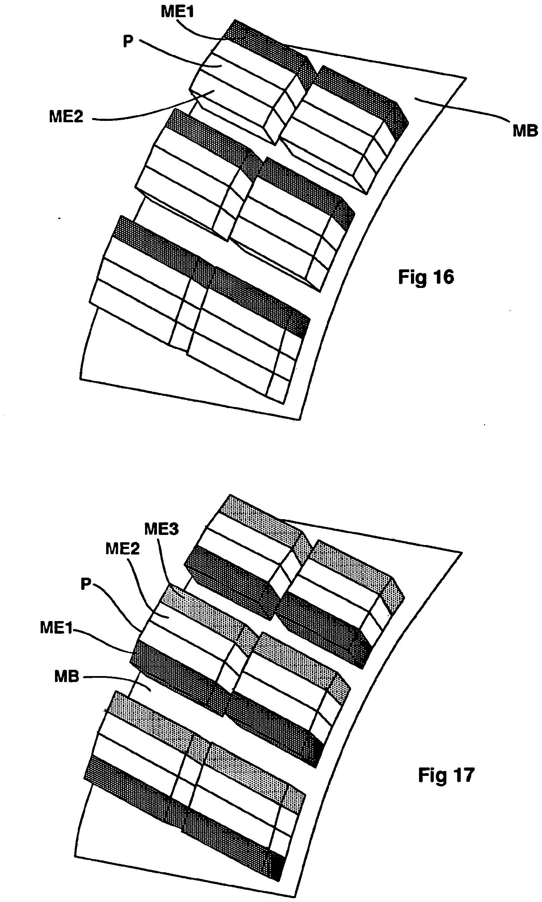

Les figures 16 et 17 permettent de visualiser schématiquement en perspective des pavés de mélange réalisés avec deux (ME1, ME2) ou trois mélanges différents (ME1, ME2, ME3).

Une fois que les pavés de mélange ont été déposés sur l'ensemble de la bande de base, on peut procéder à la phase de vulcanisation de l'ébauche de pneumatique.

A cet effet, ladite ébauche est introduite dans un moule de cuisson comprenant une partie en relief destinée à donner la forme définitive à la bande de roulement, et communément désigné sous l'appellation de garniture. Il est donc de la première importance de positionner le pneumatique avec précision dans la presse de cuisson, de manière à ce que les parties en relief de la garniture se présentent radialement au droit des intervalles entre les pavés de mélange de l'ébauche de pneumatique et que chaque pavé de mélange se trouve placé radialement au droit de l'élément de sculpture lui correspondant.

A cet effet il conviendra de prévoir des moyens d'indexation précis, disposés sur le support d'assemblage M et sur la presse de cuisson, et dont la mise en correspondance permet d'assurer le bon azimutage de l'ébauche de pneumatique en presse. De tels moyens sont décrits par exemple dans la publication WO 2006/069912 déjà citée.

## Revendications

1. Dispositif pour la fabrication de la bande de roulement d'un pneumatique, ladite bande de roulement comprenant une pluralité d'éléments de sculpture en relief de hauteur h et dont la surface radialement externe (Ps) est destinée à être en contact avec le sol lorsque le pneumatique roule sur la chaussée, comprenant un support rotatif (M) apte à supporter une bande de base (MB) formant une surface de réception (S), une matrice d'extrusion (1) comprenant une pluralité de buses d'extrusion (11, 12, 13, 14, 15) dont les canaux de sortie sont orientés radialement sensiblement perpendiculairement à la surface de réception (S), au moins deux moyens d'alimentation en mélange (31, 32) débouchant chacun sur une ou plusieurs buses d'extrusion distinctes, et des moyens de positionnement et de déplacement de la matrice d'extrusion par rapport à la surface de réception (S).

2. Dispositif selon la revendication 1, dans lequel les moyens d'alimentation en mélange (31, 32) comprennent des extrudeuses volumétriques.

3. Dispositif selon l'une des revendications 1 ou 2, dans lequel les moyens de déplacement et de positionnement des buses sont aptes à déplacer la matrice d'extrusion (1) dans une direction radiale sensiblement perpendiculaire à la surface de réception (S).

4. Dispositif selon l'une des revendications 1 à 3, dans lequel les orifices (111, 121, 131, 141, 151) des buses d'extrusion (11, 12, 13, 14, 15) sont disposés de telle sorte qu'ils s'inscrivent sensiblement dans une aire plane (Ps) ayant sensiblement la forme de l'aire d'un élément de sculpture destinée à être en contact avec le sol.

5. Dispositif selon l'une des revendications 1 à 4, dans lequel les orifices de sortie (111, 121, 131, 141, 151) des buses d'extrusion (11, 12, 13, 14, 15) ont une section réduite par rapport à la section des buses, de manière à permettre la rupture des cordons de mélange lors de l'arrêt du débit d'extrusion.

6. Dispositif selon l'une des revendications 1 à 5, dans lequel une paroi (21, 22, 23) apte à s'étendre dans la direction du flux de sortie du mélange au-delà du plan formé par les orifices des buses d'injection, entoure la matrice d'extrusion (1).

7. Dispositif selon la revendication 6, dans lequel ladite paroi (22, 23) a la forme d'un cylindre dont les génératrices sont orientées dans la direction perpendiculaire à la surface de réception (S), et passent par une courbe fermée dont la forme correspond sensiblement à la circonférence de l'aire (Ps) d'un élément de sculpture destiné à être en contact avec le sol.

8. Dispositif selon la revendication 7, dans lequel ladite paroi (23) est mobile par rapport à la matrice d'extrusion (1).

9. Dispositif selon la revendication 6, dans lequel ladite paroi (21) a la forme d'un cône, dont les génératrices passent par une courbe fermée dont la forme correspond sensiblement à la circonférence de l'aire (Ps) d'un élément de sculpture destiné à être en contact avec le sol, et convergent sensiblement vers un point radialement externe à la surface de réception (S) en faisant un angle donné δ par rapport à la direction perpendiculaire à la surface de réception S.

10. Dispositif selon la revendication 7 ou 9, dans lequel ladite paroi (21, 22) est fixe par rapport à la matrice d'extrusion (1).

11. Méthode de fabrication de la bande de roulement d'un pneumatique à l'aide d'un dispositif selon l'une des revendications 1 à 10, ladite bande de roulement comprenant une pluralité d'éléments de sculpture en relief, dans laquelle on réalise les étapes consistant à :
- déposer sur un support rotatif (M) une bande de base (MB) à partir d'un mélange élastomérique de base non vulcanisé et faisant fonction de surface de réception (S),
- déposer directement sur ladite bande de base, à des emplacements prédéterminés correspondant sensiblement à l'emplacement des éléments de sculpture, par extrusion de mélanges élastomériques (ME1, ME2) à l'aide des buses d'extrusion (11, 12, 13, 14, 15), des pavés (P) de mélange non vulcanisé, destinés à former un élément de sculpture en relief, chacun des pavés étant composé d'au moins deux mélanges élastomériques (ME1, ME2) non vulcanisés de qualités distinctes.

12. Méthode de fabrication selon la revendication 11, dans laquelle, tout en extrudant les mélanges au travers des buses d'extrusion, on déplace ladite matrice d'extrusion (1) perpendiculairement à la surface de réception (S), depuis une position dans laquelle les orifices (111, 121, 131, 141, 151) des buses d'extrusion (11, 12, 13, 14, 15) sont disposés au plus près de la surface de réception (S), jusqu'à une position dans laquelle les orifices des buses d'extrusion sont situés à une distance prédéterminée (h) de la surface de réception, et dans laquelle on stoppe le débit d'extrusion lorsque cette dernière position est atteinte.

13. Méthode de fabrication selon la revendication 12, dans laquelle on régule le débit des moyens d'alimentation (31, 32) de manière à ce que les débits en sortie de chacune des buses de sortie soient sensiblement égaux, de sorte que chacun des mélanges affleure au niveau de la face radialement extérieure (Ps) de l'élément de sculpture (P).

14. Méthode de fabrication selon la revendication 13, dans laquelle on prolonge le déplacement de la matrice d'extrusion (1) au delà de la distance prédéterminée (h) jusqu'à provoquer la rupture des cordons de mélange sortant des orifices des buses d'extrusion.

15. Méthode de fabrication selon l'une des revendications 11 à 14 comprenant également l'étape consistant à positionner l'ébauche de pneumatique dans la presse de vulcanisation selon un azimut déterminé, de telle sorte que les pavés de mélange (P) soient situés radialement au droit des éléments de sculpture leur correspondant.

## Claims

1. Device for manufacturing the tread of a tyre, said tread comprising a plurality of relief tread elements of height h whose radially outer surface (Ps) is designed to be in contact with the ground when the tyre is rolling on the road surface, comprising a rotary support (M) suitable for supporting a base strip (MB) forming a receiving surface (S), an extrusion die (1) comprising a plurality of extrusion nozzles (11, 12, 13, 14, 15) whose outlet channels are oriented radially approximately perpendicular to the receiving surface (S), at least two compound supply means (31, 32), each feeding into one or more separate extrusion nozzles, and means for positioning and moving the extrusion die relative to the receiving surface (S).

2. Device according to Claim 1, in which the compound supply means (31, 32) comprise positive-displacement extruders.

3. Device according to one of Claims 1 or 2, in which the nozzle movement and positioning means are suitable for moving the extrusion die (1) in a radial direction approximately perpendicular to the receiving surface (S).

4. Device according to one of Claims 1 to 3, in which the orifices (111, 121, 131, 141, 151) of the extrusion nozzles (11, 12, 13, 14, 15) are arranged in such a way that they are inscribed approximately within a planar area (Ps) having approximately the shape of the area of a tread element designed to be in contact with the ground.

5. Device according to one of Claims 1 to 4, in which the outlet orifices (111, 121, 131, 141, 151) of the extrusion nozzles (11, 12, 13, 14, 15) have a smaller cross section than the cross section of the nozzles, to allow the beads of compound to break when the extrusion flow is interrupted.

6. Device according to one of Claims 1 to 5, in which a wall (21, 22, 23) suitable for extending in the direction of the outlet flow of the compound beyond the plane formed by the injection nozzle orifices surrounds the extrusion die (1).

7. Device according to Claim 6, in which said wall (22, 23) is in the shape of a cylinder whose generatrices are oriented in the direction perpendicular to the receiving surface (S), and pass through a closed curve whose shape essentially corresponds to the circumference of the area (Ps) of a tread element designed to be in contact with the ground.

8. Device according to Claim 7, in which said wall (23) is movable relative to the extrusion die (1).

9. Device according to Claim 6, in which said wall (21) is in the shape of a cone whose generatrices pass through a closed curve whose shape corresponds essentially to the circumference of the area (Ps) of a tread element designed to be in contact with the ground, and essentially converge towards a radially outer point on the receiving surface (S), forming a given angle 5 with respect to the direction perpendicular to the receiving surface (S).

10. device according to Claim 7 or 9, in which said wall (21, 22) is fixed relative to the extrusion die (1).

11. Process for manufacturing the tread of a tyre using a device according to one of Claims 1 to 10, said tread comprising a plurality of relief tread elements, in which process the following steps are performed:
• depositing on a rotary support (M) a base strip (MB) from an uncured elastomeric base compound, acting as a receiving surface (S), and
• depositing directly on said base strip, at predetermined locations corresponding essentially to the location of the tread elements, by extruding elastomeric compounds (ME1, ME2) through extrusion nozzles (11, 12, 13, 14, 15), blocks (P) of uncured compound designed to form a relief tread element, each of the blocks being composed of at least two uncured elastomeric compounds (ME1, ME2) of differing qualities.

12. Manufacturing process according to Claim 11, in which, while the compounds are extruded through the extrusion nozzles, said extrusion die (1) is moved perpendicular to the receiving surface (S), from a position in which the orifices (111, 121, 131, 141, 151) of the extrusion nozzles (11, 12, 13, 14, 15) are as close as possible to the receiving surface (S), to a position in which the extrusion nozzle orifices are at a predetermined distance (h) from the receiving surface, and in which extrusion is stopped when this last position is reached.

13. Manufacturing process according to Claim 12, in which the flow rate of the supply means (31, 32) is regulated in such a way that the flow rates at the exit of each of the exit nozzles are approximately equal, so that each of the compounds comes flush with the radially outer face (Ps) of the tread element (P).

14. Manufacturing process according to Claim 13, in which the movement of the extrusion die (1) is continued past the predetermined distance (h) until the beads of compound leaving the extrusion nozzle orifices break.

15. Manufacturing process according to one of Claims 11 to 14 and also including the step of positioning the green tyre in the curing press at a predetermined azimuth, so that the blocks (P) of compound are situated radially facing their corresponding tread elements.

## Patentansprüche

1. Vorrichtung zur Herstellung der Lauffläche eines Reifens, wobei die Lauffläche eine Vielzahl von erhabenen Profilelementen der Höhe h aufweist, deren radial äußere Fläche (Ps) dazu bestimmt ist, mit dem Boden in Kontakt zu sein, wenn der Reifen auf der Straße abrollt, wobei die Vorrichtung Folgendes aufweist: einen rotierenden Träger (M), der geeignet ist, einen Basisstreifen (MB) zu tragen, der eine Aufnahmefläche (S) bildet, eine Extrusionsmatrize (1), die eine Vielzahl von Extrusionsdüsen (11, 12, 13, 14, 15) aufweist, deren Ausgangskanäle radial im Wesentlichen senkrecht zu der Aufnahmefläche (S) ausgerichtet sind, mindestens zwei Mittel zur Zuführung von Mischung (31, 32), die jeweils an einer oder mehreren verschiedenen Extrusionsdüsen münden, und Mittel zur Positionierung und Bewegung der Extrusionsmatrize bezüglich der Aufnahmefläche (S).

2. Vorrichtung nach Anspruch 1, wobei die Mittel zur Zuführung von Mischung (31, 32) Volumenextruder aufweisen.

3. Vorrichtung nach einem der Ansprüche 1 oder 2, wobei die Mittel zur Bewegung und Positionierung der Düsen geeignet sind, die Extrusionsmatrize (1) in einer radialen Richtung zu bewegen, die im Wesentlichen senkrecht zu der Aufnahmefläche (S) ist.

4. Vorrichtung nach einem der Ansprüche 1 bis 3, wobei die Öffnungen (111, 121, 131, 141, 151) der Extrusionsdüsen (11, 12, 13, 14, 15) derart angeordnet sind, dass sie im Wesentlichen in einer ebenen Fläche (Ps) liegen, die im Wesentlichen die Form der Fläche eines Profilelements hat, das dazu bestimmt ist, mit dem Boden in Kontakt zu sein.

5. Vorrichtung nach einem der Ansprüche 1 bis 4, wobei die Ausgangsöffnungen (111, 121, 131, 141, 151) der Extrusionsdüsen (11, 12, 13, 14, 15) einen im Vergleich zum Querschnitt der Düsen verminderten Querschnitt aufweisen, so dass sie das Abreißen der Mischungsfäden beim Anhalten des Extrusionsstroms ermöglichen.

6. Vorrichtung nach einem der Ansprüche 1 bis 5, wobei eine Wand (21, 22, 23), die geeignet ist, sich in der Richtung des Ausgangsflusses der Mischung über die von den Öffnungen der Spritzdüsen gebildete Ebene hinaus zu erstrecken, die Extrusionsmatrize (1) umgibt.

7. Vorrichtung nach Anspruch 6, wobei die Wand (22, 23) die Form eines Zylinders hat, dessen Erzeugende in der zu der Aufnahmefläche (S) senkrechten Richtung ausgerichtet sind und durch eine geschlossene Kurve verlaufen, deren Form im Wesentlichen dem Umfang der Fläche (Ps) eines Profilelements entspricht, das dazu bestimmt ist, mit dem Boden in Kontakt zu sein.

8. Vorrichtung nach Anspruch 7, wobei die Wand (23) relativ zu der Extrusionsmatrize (1) beweglich ist.

9. Vorrichtung nach Anspruch 6, wobei die Wand (21) die Form eines Kegels hat, dessen Erzeugende durch eine geschlossene Kurve verlaufen, deren Form im Wesentlichen dem Umfang der Fläche (Ps) eines Profilelements entspricht, das dazu bestimmt ist, mit dem Boden in Kontakt zu sein, und im Wesentlichen in einem bezüglich der Aufnahmefläche (S) radial äußeren Punkt konvergieren, wobei sie mit der zu der Aufnahmefläche (S) senkrechten Richtung einen gegebenen Winkel 8 bilden.

10. Vorrichtung nach Anspruch 7 oder 9, wobei die Wand (21, 22) bezüglich der Extrusionsmatrize (1) feststehend ist.

11. Verfahren zur Herstellung der Lauffläche eines Reifens mit Hilfe einer Vorrichtung nach einem der Ansprüche 1 bis 10, wobei die Lauffläche eine Vielzahl von erhabenen Profilelementen aufweist, welches die folgenden Schritte aufweist:
- Aufbringen, auf einem rotierenden Träger (M), eines Basisstreifens (MB) ausgehend von einer nicht vulkanisierten Basis-Elastomermischung, welcher als Aufnahmefläche (S) dient,
- Aufbringen, unmittelbar auf dem Basisstreifen, an Vorbestimmten Stellen, die im Wesentlichen der Position der Profilelemente entsprechen, durch Extrusion von Elastomermischungen (ME1, ME2) mit Hilfe von Extrusionsdüsen (11, 12, 13, 14, 15), von Blöcken (P) aus nicht vulkanisierter Mischung, die dazu bestimmt sind, ein erhabenes Profilelement zu bilden, wobei jeder der Blöcke aus mindestens zwei nicht vulkanisierten Elastomermischungen (ME1, ME2) von unterschiedlicher Art besteht.

12. Herstellungsverfahren nach Anspruch 11, wobei, während die Mischungen durch Extrusionsdüsen extrudiert werden, die Extrusionsmatrize (1) senkrecht zu der Aufnahmefläche (S) aus einer Position, in welcher die Öffnungen (111, 121, 131, 141, 151) der Extrusionsdüsen (11, 12, 13, 14, 15) am nächsten bei der Aufnahmefläche (S) angeordnet sind, in eine Position, in welcher sich die Öffnungen der Extrusionsdüsen in einem Vorbestimmten Abstand (h) von der Aufnahmefläche befinden, bewegt wird, und wobei der Extrusionsstrom gestoppt wird, wenn diese letztere Position erreicht ist.

13. Herstellungsverfahren nach Anspruch 12, wobei der Durchsatz der Zuführungsmittel (31, 32) derart geregelt wird, dass die Durchsätze am Ausgang der einzelnen Austrittsdüsen im Wesentlichen gleich sind, so dass jede der Mischungen bündig mit der radial äußeren Seite (Ps) des Profilelements (P) abschließt.

14. Herstellungsverfahren nach Anspruch 13, wobei die Bewegung der Extrusionsmatrize (1) über den Vorbestimmten Abstand (h) hinaus fortgesetzt wird, bis das Reißen der aus den Öffnungen der Extrusionsdüsen austretenden Mischungsfäden hervorgerufen wird.

15. Herstellungsverfahren nach einem der Ansprüche 11 bis 14, welches außerdem den Schritt aufweist, der darin besteht, den Reifenrohling in der Vulkanisierpresse gemäß einem bestimmten Azimut zu positionieren, derart, dass sich die Mischungsblöcke (P) radial an der Position der ihnen entsprechenden Profilelemente befinden.
